# EUROPÄISCHE PATENTSCHRIFT

(11) **EP 1 504 992 B1**
(45) Veröffentlichungstag und Bekanntmachung des Hinweises auf die Patenterteilung: **28.01.2009**
(21) Anmeldenummer: 04017057.3
(22) Anmeldetag: 20.07.2004
(51) Int. Cl.: B64C 3/00

(54) **Hohlkörper bestehend aus mindestens zwei miteinander verbundenen Bauteilen und Verfahren zum Montieren**
Hollow body with at least two elements connected and method of assembly
Corps creux avec au moins deux éléments reliés entre eux et procédé d'assemblage

(30) Priorität: 02.08.2003 DE 10335483
(43) Veröffentlichungstag der Anmeldung: 09.02.2005
(73) Patentinhaber: Airbus Deutschland GmbH, 21129 Hamburg (DE)
(72) Erfinder: Dörsing, Hans, Dipl.-Ing., 27749 Delmenhorst (DE); Hoppe, Günter, Dipl.-Ing., 28876 Oyten (DE); Sander, Peter, Dipl.-Ing., 28215 Bremen (DE)
(74) Vertreter: Maiwald Patentanwalts GmbH

(56) Entgegenhaltungen:
- WO-A-95/18013
- US-A- 5 788 146
- US-B1- 6 286 289

## Beschreibung

Die Erfindung betrifft einen Hohlkörper bestehend aus mindestens zwei miteinander verbundenen Bauteilen, insbesondere Strukturbauteilen eines Flugzeuges.

In der Luftfahrttechnik werden Hohlkörper zum Teil mit Wabenmaterial ausgesteift, wobei die Vorbereitung und abschließende Verarbeitung technologisch sehr aufwendig ist. Von Nachteil ist weiterhin, dass bei Auftritt von Dauerschwingungen oder Korrosion die Wabenaussteifung beschädigt wird und somit die Funktion nicht mehr gegeben ist.

In der Regel werden Montagegruppen durch Vernietung von Einzelteilen hergestellt. Diese Verbindungsart führt neben dem großen Nietaufwand nachteiligerweise zu einem zusätzlichen Gewicht infolge von Verbindungselementen, flächig aufgetragenen Dichtmitteln und Materialüberlappungen.

Der Erfindung liegt nun die Aufgabe zugrunde, einen Hohlkörper der eingangs genannten Art zu schaffen, dessen Bauteile durch Verschachtelung miteinander mechanich fest verbunden sind.

Die Aufgabe wird erfindungsgemäß dadurch gelöst, daß ein aus mindestens einer Querrippe und mindestens einer Längsrippe zusammengestecktes Rippengerüst vorgesehen ist, daß die Querrippe an zwei einander gegenüberliegenden Seiten zungenförmige Verbindungselemente aufweist, die in Schlitze von jeweils einem Deckblech eingreifen, daß an den senkrecht zu der Längsrippe liegenden Stirnseiten jeweils ein Abschlußblech angeordnet ist, und daß nach dem Fügen des Hohlkörpers dieser durch eine mechanische Verbindung der Bauelemente fixiert ist, und
- daß die Querrippe und die Längsrippe mit Schlitzen versehen sind, und daß das Rippengerüst durch Zusammenstecken der Quer- und der Längsrippe gefertigt ist, und
- daß die Höhe der zungenförmigen Verbindungselemente der Materialstärke in den Deckblechen entspricht,
Ausgestaltungen der Erfindung bestehen darin,
- daß die zungenförmigen Verbindungselemente der Querrippe in engtolerierte Schlitze der Deckbleche eingreifen,
- daß die mit engtolerierten Schlitzen versehenen Deckbleche gemäß der Wandstärke der aufzunehmenden Querrippe in technisch erforderlichen Längen ausgeführt sind,
- daß die Abschlußbleche Schlitze aufweisen, in die zungenförmige Verbindungselemente eingreifen, die an den Stirnseiten der Querrippe angeordnet und den Schlitzen zugeordnet sind,
- daß die zungenförmigen Verbindungselemente zylinderförmig ausgebildet sind, die in zylinderförmige Schlitze der Deckbleche eingreifen, und
- daß die Bauelemente durch eine Klebeverbindung, durch eine lasergeschweißte Verbindung oder durch eine Lötverbindung mechanisch fest miteinander verbunden sind.

Anspruch 9 betrifft ein Verfahrem zum Montieren von Bauelementen eines Hohlkörpers nach einem der Ansprüche 1 bis 8.

Ein Vorteil der Erfindung besteht in der extremen Leichtbauweise durch den Entfall von materialintensiven Verbindungselementen, Dichtmitteln, Materialüberlappungen sowie von abgewinkelten Strukturteilen. Erfindungsgemäße Vorteile sind auch in den stark vereinfachten Einzelteilen, dem weitgehenden Verzicht auf Montagehilfsmittel bei der Montage durch einfaches Zusammenstecken der Bauteile sowie in einer automatisierbaren Herstellung der Klebe-, Löt- oder Schweißverbindung infolge der eigenstabilen Steckverbindungen zu sehen.

In der Zeichnung ist ein Ausführungsbeispiel nach der Erfindung dargestellt, und zwar zeigt:
- Fig. 1 und 2:: einen Hohlkörper im zusammengegesteckten Zuständ, und
- Fig. 3:: die einzelnen Bauelemente des Hohlkörpers im nicht zusammengesteckten Zustand.

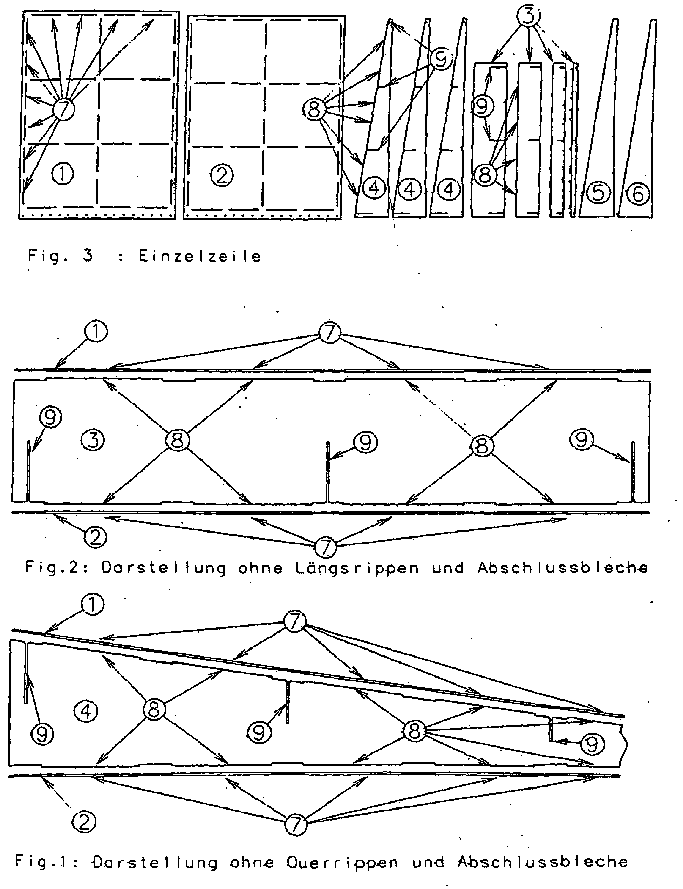

In Fig. 1 und 2 weist ein kompletter Hohlkörper A ein oberes Deckblech 1 sowie ein unteres Deckblach 2 auf, welche an einem aus einer Querrippe 3 und einer Längsrippe 4 (vgl. Fig. 2) bestehenden Rippengerüst befestigt sind. Das Rippengerüst wird durch Zusammenstecken der beiden Rippen 3 und 4 hergestellt, wozu die Querrippe 3 und die Längsrippe 4 - wie in Fig. 3 dargestellt ist - mit Schlitzen 9 versehen sind. Die Stirnseiten des Hohlkörpers sind durch ein vorderes bzw. hinteres Abschlußblech 5 bzw. 6 abgedeckt, welche in ihren Einzelheiten zeichnerisch nicht dargestellt sind.

Wie aus Fig. 3 zu ersehen ist, besteht der im nicht zusammengesteckten Zustand dargestellte Hohlkörper B aus dem oberen Deckblech 1, dem unteren Deckblech 2, der Querrippe 3, der Längsrippe 4 sowie den (symbolisch dargestellten) Abschlußblechen 5 und 6. Hierbei erfolgt die Ausführung der Deckbleche 1 und 2 mit engtolerierten Schlitzen 7 gemäß der Wandstärke der aufzunehmenden Querrippe 3 in technisch erforderlichen Längen. Während die Deckbleche 1 und 2 beispielsweise jeweils vier Schlitze 7 aufweisen, ist die Querrippe 3 an ihren den Deckblechen 1 und 2 zugeordneten Seiten mit jeweils vier zungenförmigen Verbindungselementen 8 versehen. Diese Verbindungselemente 8 haben die Maße und Lage der Schlitze 7 in den Deckblechen 1 und 2, wobei die Höhe der zungenförmigen Verbindungselementen 8 der Materialstärke der Deckbleche 1 und 2 entspricht. Weiterhin ist die Querrippe 3 in ihrer Längsrichtung geschlitzt ausgeführt, wobei der Schlitz 9 zur Aufnahme der Längsrippe 4 dient und daher eine Schlitzbreite gemäß der Materialstärke der Längsrippe 4 aufweist. Zudem ist die Längsrippe 4 in Querrichtung entsprechend der Fügetiefe und der Materialstärke der Querrippe 3 geschlitzt.

Die Montage der einzelnen Bauelemente des nicht zusammengesteckten Hohlkörpers B gemäß Fig. 3 zu dem kompletten Hohlkörper A nach Fig. 1 und 2 umfaßt folgende Verfahrensschritte:
- Querrippe 3 und Längsrippe 4 werden zu einem Rippengerüst zusammengesteckt, wobei eine weitere beliebige Folge von Querrippen 3 gemäß technischer Anforderungen möglich ist.
- Auf das aus Querrippe 3 und Längsrippe 4 gebildete Rippengerüst werden die Deckbleche 1 und 2 derart aufgelegt, daß die zungenförmigen Verbindungselemente 8 der Querrippe 3 in den Schlitzen 7 der Deckbleche 1 und 2 positioniert sind.
- Die Abschlußbleche 5 und 6 können in gleicher Art und Weise mit den Deckblechen 1 und 2, der Querrippe 3 sowie der Längsrippe 4 zu einem geschlossenen Hohlkörper A verbunden werden.
- Nach dem Fügen des Hohlkörpers wird dieser auf einer vorgegebenen Fertigungseinheit fixiert zum Kleben, Löten oder Schweißen der Bauelemente 1 bis 6.

### Bezugszeichenliste

- 1: oberes Deckblech
- 2: unteres Deckblech
- 3: Querrippe
- 4: Längsrippe
- 5: vorderes Abschlußblech
- 6: hinteres Abschlußblech
- 7: Schlitze
- 8: zungenförmige Verbindungselemente
- 9: Schlitze der Querrippe 3 bzw. der Längsrippe 4

## Patentansprüche

1. Hohlkörper bestehend aus mindestens zwei miteinander verbundenen Bauteilen, eines Flugzeuges, wobei
ein aus mindestens einer Querrippe (3) und mindestens einer Längsrippe (4) zusammengestecktes Rippengerüst vorgesehen ist, daß die Querrippe (3) an zwei einander gegenüberliegenden Seiten zungenförmige Verbindungselemente (8) aufweist, die in Schlitze (7) von jeweils einem Deckblech (1 bzw. 2) eingreifen, daß an den senkrecht zu der Längsrippe (4) liegenden Stirnseiten jeweils ein Abschlußblech (5 bzw. 6) angeordnet ist, und daß nach dem Fügen des Hohlkörpers (A) dieser durch eine mechanische Verbindung der Bauelemente (1, 2, 3, 4, 5 und 6) fixiert ist.
**dadurch gekennzeichnet, daß**:
die Querrippe (3) und die Längsrippe (4) mit Schlitzen (9) versehen sind, und daß das Rippengerüst durch Zusammenstecken der Quer- und der Längsrippe (3 bzw. 4) gefertigt ist; und
die Höhe der zungenförmigen Verbindungselemente (8) der Materialstärke in den Deckblechen (1, 2) entspricht.

2. Hohlkörper nach Anspruch 1, **dadurch gekennzeichnet, daß** die zungenförmigen Verbindungselemente (8) der Querrippe(3) in engtolerierte schlitze (7) der Deckbleche (1, 2) eingreifen.

3. Hohlkörper nach Anspruch 1, oder 2, **dadurch gekennzeichnet, daß** die mit engtolerierten Schlitzen (7) versehenen Deckbleche (1, 2) gemäß der Wandstärke der aufzunehmenden Querrippe (3) in technisch erforderlichen Längen ausgeführt sind.

4. Hohlkörper nach Anspruch 1, **dadurch gekennzeichnet, daß** die Abschlußbleche (5, 6) Schlitze aufweisen, in die zungenförmige Verbindungselemente eingreifen, die an den Stirnseiten der Querrippe (3) angeordnet und den Schlitzen zugeordnet sind.

5. Hohlkörper nach Anspruch 1, 2, 3, oder 4, **dadurch gekennzeichnet, daß** die zungenförmigen Verbindungselemente (8) zylinderförmig ausgebildet sind, die in zylinderförmige Schlitze (7) der Deckbleche (1, 2) eingreifen.

6. Hohlkörper nach einem der Ansprüceh 1 bis 5, **dadurch gekennzeichnet, daß** die Bauelemente (1, 2, 3, 4, 5 und 6) durch eine Klebeverbindung mechanisch fest miteinander verbunden sind.

7. Hohlkörper nach einem der Ansprüceh 1 bis 5, **gekennzeichnet durch** eine lasergeschweißte mechanisch feste Verbindung der Bauelemente (1, 2, 3, 4, 5 und 6).

8. Hohlkörper nach einem der Ansprüche 1 bis 5, **dadurch gekennzeichnet, daß** die Bauelemente (1, 2, 3, 4, 5 und 6) durch eine Lötverbindung mechanisch fest miteinander verbunden sind.

9. Verfahren zum Montieren von Bauelementen eines Hohlkörper nach einem der Ansprüche 1 bis 8, das Verfahren aufweisend die Schritte:
Zusammenstecken einer Querrippe (3) und einer Längsrippe (4) zu einem Rippengerüst;
Auflegen von Deckblechen (1, 2) auf das Rippengerüst derart, dass zungenförmig Verbindungselemente (8) der Querrippe (3) in Schlitzen (7) der Deckbleche positioniert sind;
Verbinden von Abschlussblechen (5, 6) mit den Deckblechen, der Querrippe sowie der Längsrippe zu einem geschlossenen Hohlkörper,
wobei die Höhe der zungenförmigen Verbindungselemente der Materialstärke in den Deckblechen entspricht.

## Claims

1. Hollow body comprising at least two interconnected components of an aircraft wherein a rib framework comprising at least one transverse rib (3) and at least one longitudinal rib (4) plugged together is provided, the transverse rib (3) comprises tongue-shaped connecting elements (8) on two opposing sides, which engage in slots (7) in a respective cover plate (1 or 2), an end plate (5 or 6) is arranged on each of the end faces lying perpendicular to the longitudinal rib (4) and after the joining of the hollow body (A) said body is secured by a mechanical connection of the structural elements (1, 2, 3, 4, 5 and 6)
**characterised in that**
the transverse rib (3) and the longitudinal rib (4) are provided with slots (9) and the rib framework is produced by plugging together the transverse and the longitudinal rib (3 or 4) and the height of the tongue-shaped connecting elements (8) corresponds to the material thickness in the cover plates (1, 2).

2. Hollow body according to claim 1, **characterised in that** the tongue-shaped connecting elements (8) of the transverse rib (3) engage in close-tolerance slots (7) in the cover plates (1, 2).

3. Hollow body according to claim 1, or 2, **characterised in that** the cover plates (1, 2) provided with close-tolerance slots (7) are embodied in technically required lengths in accordance with the wall thickness of the transverse rib (3) to be accommodated.

4. Hollow body according to claim 1, **characterised in that** the end plates (5, 6) comprise slots, into which the tongue-shaped connecting elements, which are arranged on the end faces of the transverse rib (3) and are assigned to the slots, engage.

5. Hollow body according to claim 1, 2, 3 or 4, **characterised in that** the tongue-shaped connecting elements (8) which engage in the cylindrical slots (7) of the cover plates (1, 2) are configured as cylinders.

6. Hollow body according to any one of claims 1 to 5, **characterised in that** the structural elements (1, 2, 3, 4, 5 and 6) are mechanically securely connected to each other by means of an adhesive joint.

7. Hollow body according to any one of claims 1 to 7, **characterised by** a laser-welded mechanically secure connection of the structural elements (1, 2, 3, 4, 5 and 6).

8. Hollow body according to any one of claims 1 to 7, **characterised in that** the structural elements (1, 2, 3, 4, 5 and 6) are mechanically securely connected to each other by means of a soldered connection.

9. Method for assembling structural elements of a hollow body according to any one of claims 1 to 8 with the method comprising the steps:
plugging together a transverse rib (3) and a longitudinal rib (4) to form a rib framework, placing cover plates (1, 2) on the rib framework in such a way that tongue-shaped connecting elements (8) of the transverse rib (3) are positioned in slots in the cover plates, connection of end plates (5, 6) to the cover plates, the transverse rib and the longitudinal rib to form a closed hollow body,
wherein the height of the tongue-shaped connecting elements corresponds to the material thickness in the cover plates.

## Revendications

1. Corps creux constitué d'au moins deux composants d'un avion assemblés entre eux, dans lequel il est prévu une ossature de nervures emboîtée composée d'au moins une nervure transversale (3) et d'au moins une nervure longitudinale (4), la nervure transversale (3) comporte des éléments d'assemblage (8) en forme de languettes sur deux côtés mutuellement opposés, lesquels éléments s'engagent dans des fentes (7) respectives d'une tôle de couverture (1 et/ou 2), une tôle de fermeture (5 et/ou 6) est respectivement disposée sur les côtés frontaux situés perpendiculairement à la nervure longitudinale (4), et le corps creux (A), après son jointoiement, est fixé par un assemblage mécanique des composants (1, 2, 3, 4, 5 et 6), **caractérisé en ce que** la nervure transversale (3) et la nervure longitudinale (4) sont munies de fentes (9), et que l'ossature de nervures est fabriquée par emboîtement de la nervure transversale et de la nervure longitudinale (3 et/ou 4), et la hauteur des éléments d'assemblage (8) en forme de languettes correspond à l'épaisseur de matériau dans les tôles de couverture (1,2).

2. Corps creux suivant la revendication 1, **caractérisé en ce que** les éléments d'assemblage (8) en forme de languettes de la nervure transversale (3) s'engagent dans des fentes (7) de grande précision des tôles de couverture (1, 2).

3. Corps creux suivant l'une des revendications 1 et 2, **caractérisé en ce que** les tôles de couverture (1, 2), munies de fentes (7) de grande précision, sont réalisées dans des longueurs techniquement requises en conformité avec l'épaisseur de paroi de la nervure transversale (3) à recevoir.

4. Corps creux suivant la revendication 1, **caractérisé en ce que** les tôles de fermeture (5, 6) comportent des fentes, dans lesquelles s'engagent des éléments d'assemblage en forme de languettes, lesquels éléments sont disposés sur les côtés frontaux de la nervure transversale (3) et sont associés aux fentes.

5. Corps creux suivant l'une des revendications 1, 2, 3 et 4, **caractérisé en ce que** les éléments d'assemblage (8) en forme de languettes sont configurés en forme de cylindres, qui s'engagent dans des fentes cylindriques (7) des tôles de couverture (1, 2).

6. Corps creux suivant l'une des revendications 1 à 5, **caractérisé en ce que** les composants (1, 2, 3, 4, 5 et 6) sont assemblés mécaniquement entre eux, de façon fixe, par un joint collé.

7. Corps creux suivant l'une des revendications 1 à 5, **caractérisé par** un assemblage mécanique fixe, par soudage au laser, des composants (1, 2, 3, 4, 5 et 6).

8. Corps creux suivant l'une des revendications 1 à 5, **caractérisé en ce que** les composants (1, 2, 3, 4, 5 et 6) sont assemblés mécaniquement entre eux, de façon fixe, par un brasage.

9. Procédé de montage de composants d'un corps creux suivant l'une des revendications 1 à 8, le procédé comprenant les étapes :
emboîtement d'une nervure transversale (3) et d'une nervure longitudinale (4) pour former une ossature de nervures ;
pose de tôles de couverture (1, 2) sur l'ossature de nervures de telle sorte que des éléments d'assemblage (8) en forme de languettes de la nervure transversale (3) sont positionnés dans des fentes (7) des tôles de couverture ;
assemblage de tôles de fermeture (5, 6) avec les tôles de couverture, la nervure transversale ainsi que la nervure longitudinale, pour former un corps creux fermé ;
la hauteur des éléments d'assemblage en forme de languettes correspondant à l'épaisseur de matériau dans les tôles de couverture.
